# FASCICULE DE BREVET EUROPEEN

(11) **EP 3 663 534 B1**
(45) Date de publication et mention de la délivrance du brevet: **09.11.2022**
(21) Numéro de dépôt: 19212270.3
(22) Date de dépôt: 28.11.2019
(51) Int. Cl.: F01D 11/24, F02C 7/00

(54) **DISPOSITIF DE MAINTIEN D'UN TUBE DE REFROIDISSEMENT POUR CARTER DE TURBOMACHINE**
HALTEVORRICHTUNG EINER KÜHLLEITUNG FÜR TURBOTRIEBWERKGEHÄUSE
DEVICE FOR HOLDING A COOLING TUBE FOR A TURBINE ENGINE HOUSING

(30) Priorité: 06.12.2018 FR 1872452
(43) Date de publication de la demande: 10.06.2020
(73) Titulaire: SAFRAN AIRCRAFT ENGINES, 75015 Paris (FR)
(72) Inventeur: MORLIERE, Simon Nicolas, 77550 MOISSY-CRAMAYEL (FR); BEAUQUIN, Nicolas Jean-Marc Marcel, 77550 MOISSY-CRAMAYEL (FR); BLANCHARD, Stéphane Pierre Guillaume, 77550 MOISSY-CRAMAYEL (FR); MOREAUX, Gaëlle Inès Méganne, 77550 MOISSY-CRAMAYEL (FR)
(74) Mandataire: Regimbeau

(56) Documents cités:
- FR-A1- 2 995 022
- FR-A1- 3 040 429
- US-A- 5 271 588
- US-A1- 2014 030 066
- US-B2- 6 896 038

## Description

### DOMAINE TECHNIQUE

La présente invention se rapporte au domaine des turbomachines, notamment pour aéronef, et concerne plus particulièrement un dispositif de maintien d'au moins un tube de refroidissement d'un système de refroidissement de carter de turbomachine.

### ETAT DE LA TECHNIQUE

Pour assurer le refroidissement de certains carters, et notamment de carter de turbine basse pression, on prévoit un dispositif de refroidissement qui comprend un ensemble de tubes de refroidissement, également appelés rampes de refroidissement, percés de trous et disposés à l'extérieur du carter, le plus souvent en entourant ledit carter, de telle sorte que de l'air, aspiré en amont de la turbomachine par rapport à la direction d'écoulement des gaz dans la turbomachine, est envoyé vers la face externe du carter. Le système de refroidissement peut comprendre en outre plusieurs boitiers, disposés autour du carter pour alimenter en air les tubes de refroidissement.

On connait des systèmes de refroidissement de type LPTCC ("Low Pressure Turbine Clearance Control" en langue anglaise, pour le contrôle des jeux pour turbine basse pression). Le système LPTCC peut être commandé par le FADEC (acronyme anglais de Full Authority Digital Engine Control, qui désigne un régulateur numérique de moteur à pleine autorité pour moteur d'aéronef) ; on parle alors de contrôle actif, le système étant alors désigné par l'acronyme LPTACC. Lorsqu'il n'est pas contrôlé par le FADEC, on parle de contrôle passif pour le système LPTCC. Sa fonction principale est de réguler le jeu rotor/stator entre les pièces de la turbine basse pression en modulant le débit d'air prélevé du flux secondaire pour le refroidissement du carter de turbine basse pression.

Les tubes de refroidissement des systèmes LPTCC ou LPTACC, sont par exemple maintenus en position autour du carter par les boitiers d'alimentation et par des supports de fixation, solidaires du carter. Les supports de fixation peuvent être des tôles de fixation, généralement des tôles planes radialement sous lesquelles viennent se fixer des colliers de fixation, également appelés colliers à douche. Les colliers de fixation entourent les tubes de refroidissement et garantissent leur positionnement autour du carter.

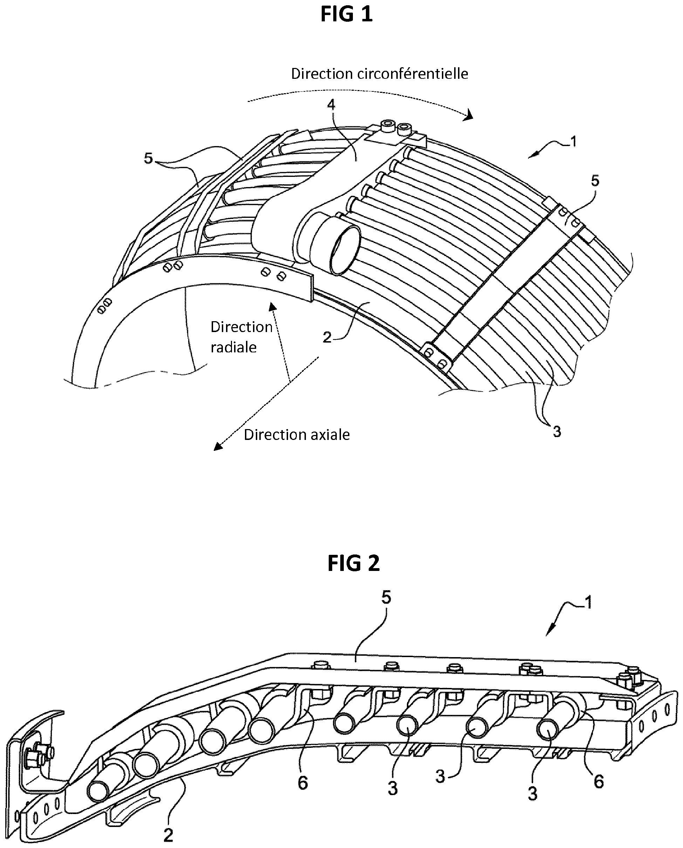

A cet effet, la **figure 1** montre une vue en perspective d'un système de refroidissement 1 pour carter de turbine basse pression d'une turbomachine selon l'état de la technique. Les figures 1 et 2 montrent un carter 2 de turbomachine, un système de refroidissement 1 pour le refroidissement du carter 2 comportant une pluralité de tubes de refroidissement 3, un boîtier d'alimentation 4 alimentant en air la pluralité de tubes de refroidissement, une pluralité de supports de fixation 5 pour le maintien en position des tubes de refroidissement 3 autour du carter 2.

La **figure 2** montre une vue partielle en coupe du système de refroidissement 1 pour carter de turbomachine selon l'état de la technique. La **figure 2** montre plus particulièrement un support de fixation sous lequel vient se fixer une pluralité de colliers 6, chaque collier 6 entourant un tube de refroidissement 3. Un certain jeu (dans le sens radial de la turbine) est ménagé entre les colliers de fixation ou les tubes de refroidissement et l'enveloppe externe du carter notamment pour éviter tout contact des pièces (colliers de fixation, tubes de refroidissement, carter) qui pourrait occasionner des dommages.

Toutefois, le jeu entre les tubes de refroidissement et l'enveloppe externe du carter doit être le plus restreint possible pour positionner les tubes de refroidissement au plus près de l'enveloppe du carter et ainsi favoriser son refroidissement.

En pratique, les contraintes technologiques, techniques, comme notamment les tolérances des pièces, les phénomènes vibratoires en fonctionnement, les dilatations des pièces en fonctionnement, imposent d'éloigner les tubes de refroidissement pour éviter tout contact entre les colliers de fixation (ou les tubes de refroidissement) qui pourrait endommager les pièces en contact, et notamment l'enveloppe externe du carter.

La difficulté technique actuelle est de trouver un bon compromis de positionnement radial des tubes de refroidissement permettant d'éviter le contact des pièces tout en rendant le système de refroidissement le plus efficace possible grâce à un entrefer le plus petit possible entre les tubes de refroidissement et le carter. En effet, un jeu minimal est difficile à garantir et à maîtriser car le carter et les tubes de refroidissement sont des pièces de grand diamètre et les différentes pièces intermédiaires intervenant dans le maintien des tubes provoquent une accumulation des tolérances qui augmentent par conséquent le jeu minimal admissible.

II a été notamment présenté différentes solutions permettant de mieux répondre à certaines contraintes. La demande de brevet français publiée sous le numéro FR3021700 A1 décrit par exemple une solution permettant de mieux maîtriser le positionnement du tube de refroidissement en diminuant le nombre de pièces intermédiaires pour le maintien des tubes de refroidissement. Des entretoises s'étendant radialement sont agencées entre deux platines, les tubes de refroidissement étant disposés entre les entretoises. Une telle solution permet notamment de minimiser l'accumulation des tolérances liées à chaque pièce intermédiaire et donc de mieux maitriser le positionnement des tubes de refroidissement.

Le brevet US689603 8 décrit un ensemble de ventilation, destinée à refroidir un anneau de stator d'une turbomachine, finit sur des rampes de soufflage de gaz composées de demi-coquilles symétriques jointes par soudage à leurs bordures opposées, et unies par des distributeurs composés pour l'essentiel de bobines cylindriques jouant le rôle d'entretoises placées entre les rampes et soudées à elles. Enfin, les moyens de maintien souple comprenant des règles permettent de compléter l'assemblage des rampes à l'anneau.

Toutefois, dans certaines situations et dans certaines configurations de turbomachine, les solutions connues ne sont pas complètement satisfaisantes et les contraintes d'efficacité de refroidissement imposent de réduire les jeux. Dans ces situations, des contacts entre les colliers de fixation et l'enveloppe de carter peuvent apparaître.

Une autre solution consiste à prévoir un moyen de réglage configuré pour permettre de régler la position relative d'un élément de maintien d'un tube de refroidissement par rapport au support de fixation. Toutefois, une telle solution requiert un réglage fin, long et fastidieux lors du montage de chaque élément de maintien.

### PRESENTATION DE L'INVENTION

La présente invention a pour but de remédier aux inconvénients de l'état de la technique en proposant un dispositif de maintien qui soit facile à monter, ne nécessite pas de réglage, et qui permet de maintenir un entrefer qui soit minimal tout en évitant des contacts entre les tubes de refroidissement et le carter de turbomachine, malgré les éventuelles dilatations des éléments de la turbomachine pouvant survenir en fonctionnement.

A cet effet, l'invention a pour objet un dispositif de maintien d'au moins un tube de refroidissement d'un système de refroidissement de carter de turbomachine, le carter s'étendant autour d'une direction axiale de la turbomachine, le dispositif de maintien comportant un support de fixation adapté pour être solidarisé au carter de façon radialement externe par rapport au carter, un élément de maintien configuré pour maintenir le tube de refroidissement, et un ensemble de liaison disposé entre l'élément de maintien et le support de fixation, remarquable en ce que l'ensemble de liaison s'étend de part et d'autre du support de fixation, définissant par rapport au support de fixation une partie externe de l'ensemble de liaison radialement extérieure au support de fixation et une partie interne de l'ensemble de liaison, radialement intérieure au support de fixation, du côté du carter, l'ensemble de liaison comprenant une pièce de liaison s'étendant à travers une ouverture du support de fixation depuis la partie externe jusqu'à la partie interne, la partie interne radialement intérieure au support de fixation étant solidaire de l'élément de maintien tandis que la partie externe comprend un élément de rappel élastique sollicité en compression en direction du support de fixation par la pièce de liaison, dans lequel l'élément de maintien est configuré pour maintenir deux tubes de refroidissement axialement adjacents, et la partie interne de l'ensemble de liaison est disposée entre deux tubes de refroidissement axialement adjacents.

Le dispositif est avantageusement complété par les caractéristiques suivantes, prises seules ou en une quelconque de leur combinaison techniquement possible :
- l'ouverture du support de fixation présente une section supérieure à la section de la partie de l'ensemble de liaison traversant cette ouverture, de sorte à autoriser un déplacement entre l'ensemble de liaison et le support, l'ouverture du support de fixation présentant une forme oblongue, l'ouverture du support de fixation présentant dans la direction circonférentielle une dimension au moins 1,5 fois supérieure à sa dimension dans la direction axiale ;
   - le dispositif comprend une douille s'étendant dans la partie externe de l'ensemble de liaison, la douille formant butée dans la direction radialement interne pour la pièce de liaison, et formant butée dans la direction radialement externe pour l'élément de rappel élastique, dans lequel dans lequel la pièce de liaison présente à son extrémité radialement externe une tête définie par une section élargie, et la douille présente un épaulement formant butée dans la direction radialement interne pour la tête de la pièce de liaison, et dans lequel la douille présente une collerette et l'élément de rappel élastique est disposé entre cette collerette et le support de fixation ;
   - la pièce de liaison est une vis comprenant un corps fileté, et la partie interne comprend un élément d'accueil taraudé disposé du côté radialement interne à l'élément de maintien, et dans lequel est vissé le corps fileté de la vis ;
   - le dispositif comprend un élément externe d'appui dans la partie externe de l'ensemble de liaison, disposé contre la face externe du support de fixation, sur lequel appuie l'élément de rappel élastique ;
   - le dispositif comprend un élément interne d'appui dans la partie interne de l'ensemble de liaison, disposé contre la face interne du support de fixation et séparant l'élément de maintien et ladite face interne du support de fixation ;
   - l'élément de maintien vient recouvrir partiellement le pourtour des tubes de refroidissement et s'étend autour d'une partie de la circonférence d'un tube de refroidissement selon une forme de demi-anneau ;
   - l'élément de maintien s'étend autour d'une partie de la circonférence d'un tube de refroidissement et laisse libre une autre partie de la circonférence du tube de refroidissement destinée à faire face au carter ;
   - l'élément de maintien présente une partie centrale globalement plane et deux portions en forme de demi-anneaux destinées à épouser et à recouvrir, au moins partiellement, la forme annulaire des deux tubes de refroidissement adjacents ;
   - un trou de l'élément de maintien traversé par la pièce de liaison est ménagé dans la partie centrale qui joint les deux portions en forme de demi-anneaux.

L'invention concerne également un système de refroidissement de carter de turbomachine, comportant :
- au moins un tube de refroidissement,
- un dispositif de maintien selon l'invention, l'élément de maintien du dispositif de maintien maintenant deux tubes de refroidissement axialement adjacents.

L'invention concerne également une turbomachine pour aéronef comprenant un carter s'étendant autour d'une direction axiale de la turbomachine, et un système de refroidissement selon l'invention, le système de refroidissement comprenant un dispositif de maintien comportant un support de fixation solidarisé au carter de façon radialement externe par rapport au carter, au moins un tube de refroidissement étant disposé de façon radialement externe par rapport au carter entre le carter et le support de fixation du dispositif de maintien.

### BREVE DESCRIPTION DES DESSINS

L'invention sera mieux comprise, grâce à la description ci-après, qui se rapporte à un exemple de réalisation préféré, donné à titre d'exemple non limitatif et expliqué avec référence aux dessins schématiques annexés, dans lesquels :
- la figure 1, déjà discutée, illustre une vue en perspective d'un système de refroidissement pour carter de turbine basse pression d'une turbomachine selon l'état de la technique,
- la figure. 2, déjà discutée, illustre une vue en coupe d'un exemple de système de refroidissement pour carter de turbomachine de l'état de la technique,
- la figure 3 illustre une vue en coupe partielle d'un exemple de système de refroidissement pour carter de turbomachine selon un mode de réalisation possible de l'invention,
- la figure 4 illustre une vue en perspective d'un exemple de système de refroidissement pour carter de turbomachine selon un mode de réalisation possible de l'invention.

### DESCRIPTION DETAILLEE

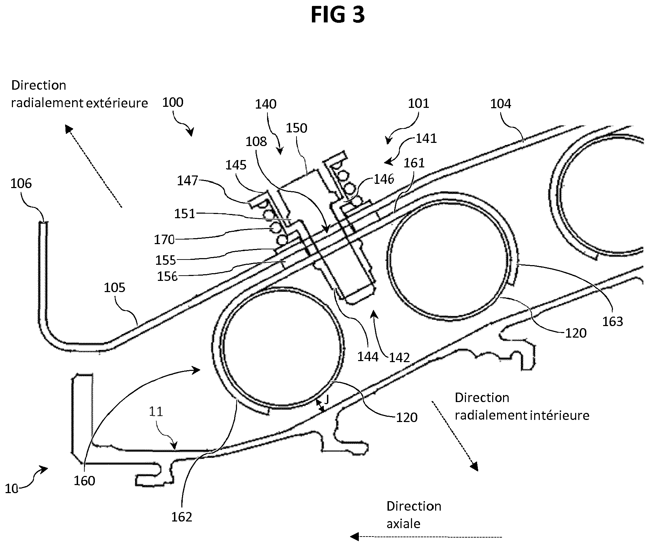

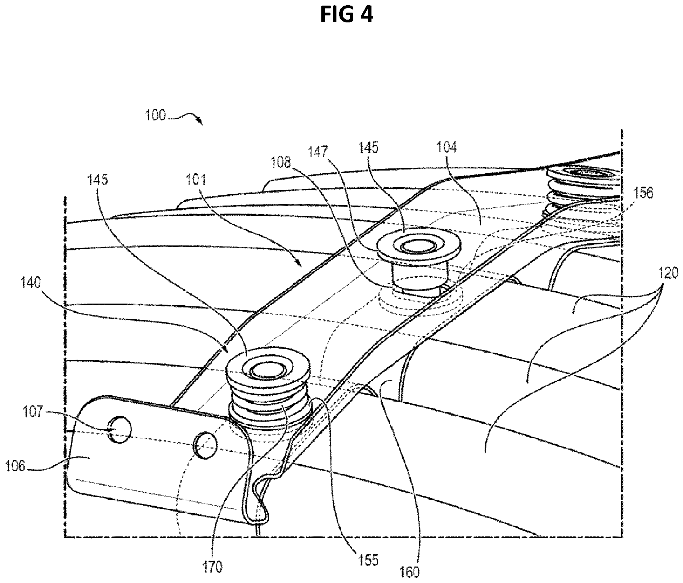

Les **figures 3** **et** 4 illustrent un exemple non limitatif de système de refroidissement 100 pour un carter 10 de turbomachine selon un mode de réalisation possible de l'invention. Typiquement, et comme dans cet exemple, le système de refroidissement 100 est monté autour du carter 10 d'une turbine basse pression.

Le système de refroidissement 100 comprend plusieurs tubes de refroidissement 120 montés autour du carter 10. Le carter 10 s'étend autour d'une direction axiale de la turbomachine, et les tubes de refroidissement 120 s'étendent transversalement à cette direction axiale, et sont distribués le long de la circonférence du carter 10. Le système de refroidissement 100 comprend également des dispositifs de maintien 101 des tubes de refroidissement 120 pour le positionnement et le maintien des tubes de refroidissement 120 autour du carter 10.

Le système de refroidissement 100 dans l'exemple représenté est un dispositif de refroidissement LPTACC. Avec typiquement des boîtiers d'alimentation, non représentés sur les **figures 3** **et** **4** mais similaires au boîtier d'alimentation 4 de la **figure. 1****,** les tubes de refroidissement 120 et le dispositif de maintien 101 constituent le système de refroidissement 100 du carter 10 de turbine basse pression. Un tel système peut également s'appliquer à un dispositif de refroidissement LPTC, ou à tout autre système de refroidissement de carter de turbomachine.

Classiquement, les deux tubes de refroidissement 120 présentent des orifices non visibles sur les **figures 3** **et** **4****.** En fonctionnement, les boîtiers d'alimentation alimentent en air relativement frais par rapport au carter 10 les tubes de refroidissement 120, qui envoient vers la face extérieure 11 du carter 10 l'air ainsi disponible au travers des orifices (non visibles sur la figure). Typiquement, les boîtiers d'alimentation sont distribués le long de la circonférence du dispositif de refroidissement. Ainsi, chaque zone des tubes de refroidissement 120 est alimentée en air par un boîtier d'alimentation proche, ce qui permet d'avoir un débit d'air envoyé via les orifices des tubes de refroidissement 120 suffisant quelle que soit la zone considérée des tubes de refroidissement 120.

Le dispositif de maintien 101 comprend notamment un support de fixation 104, prenant ici la forme d'une tôle de fixation, présentant une partie principale 105, une première extrémité 106, et une seconde extrémité (non représentée). Le support de fixation 104 est solidarisé au carter 10 de façon radialement externe par rapport au carter 10. A cet effet, les extrémités 106 du support de fixation 104 peuvent présenter des moyens de fixations tels que des trous 107 accueillant des boulons ou des rivets, afin de permettre la fixation du support de fixation 104 solidairement au carter, éventuellement par l'intermédiaire de structures intermédiaires. Il est possible que les trous 107 présentent une forme oblongue, avec une dimension supérieure dans une direction (typiquement dans la direction axiale), afin de permettre une libre dilatation du carter 10 par rapport au support de fixation 104 dans cette direction.

Le dispositif de maintien 101 comprend plusieurs éléments de maintien 160 de tube de refroidissement 120. Chaque élément de maintien 160 permet l'accroche d'au moins un tube de refroidissement 120. L'élément de maintien 160 est par exemple un support de maintien ou une plaque de maintien préformée.

Avantageusement, l'élément de maintien 160 s'étend autour d'une partie de la circonférence d'un tube de refroidissement 120, typiquement en forme de demi-anneau, et laisse libre une autre partie de la circonférence du tube de refroidissement 120 destinée à faire face au carter 10 de turbomachine. L'élément de maintien 160 vient recouvrir partiellement le pourtour des tubes de refroidissement 120 et uniquement une partie radialement externe des tubes de refroidissement 120, notamment le pourtour des tubes de refroidissement 120 en regard du support de fixation 104. C'est à ce niveau que l'élément de maintien 160 est rendu solidaire du tube de refroidissement 120, par exemple par brasage.

L'élément de maintien peut ainsi présenter une partie centrale 161 globalement plane et deux portions 162, 163 en forme de demi-anneaux destinées à épouser et à recouvrir, au moins partiellement, la forme annulaire de deux tubes de refroidissement 120 adjacents. Les tubes de refroidissement 120 sont solidarisés sur l'élément de maintien 160 par exemple par brasage. L'élément de maintien 160 permet avantageusement de solidariser les tubes de refroidissement au niveau d'une partie radialement externe des tubes de refroidissement, c'est-à-dire côté support de fixation 104, notamment de manière à éviter la présence d'une pièce ou d'un élément supplémentaire entre le tube de refroidissement 120 et le carter 10, et de manière à pouvoir rapprocher davantage les tubes de refroidissement 120 du carter 10 pour l'optimisation du refroidissement de celui-ci.

Avantageusement, l'élément de maintien 160, tel que représenté, permet de solidariser deux tubes de refroidissement 120 au moyen d'un même et unique élément de maintien 160. Dans ce mode de réalisation, on réalise un maintien et un positionnement de deux tubes de refroidissement 120 axialement adjacents en réalisant uniquement une ouverture 108 dans le support de fixation 104. Ainsi, pour une turbomachine donnée avec un nombre de tube de refroidissement donné, le support de fixation 104 selon l'invention présentera moins d'ouverture 108 et moins de zone d'accroché qu'un support de fixation selon l'état de la technique. Toutefois, il est également envisagé de réaliser un élément de maintien permettant de solidariser individuellement un tube de refroidissement de manière à améliorer la précision de réglage de la position radiale des tubes de refroidissement 120 par rapport au carter 10.

Le dispositif de maintien 101 comprend également un ensemble de liaison 140 entre l'élément de maintien 101 et le support de fixation 104, qui a pour fonction de réaliser la liaison mécanique entre l'élément de maintien 101 et le support de fixation 104. En effet, l'élément de maintien 101 doit supporter au moins un tube de refroidissement 120 radialement au-dessus du carter 10 en laissant un jeu J entre un tube de refroidissement 120 et la surface externe 11 du carter 10, et doit donc pour ce faire être supporté par le support de fixation 104.

L'ensemble de liaison 140 s'étend de part et d'autre du support de fixation 104, à travers l'ouverture 108, ce qui définit par rapport au support de fixation 104 une partie externe 141 de l'ensemble de liaison 140, radialement extérieure au support de fixation 104, et une partie interne 142 de l'ensemble de liaison, radialement intérieur au support de fixation 104, du côté du carter 10 de la turbomachine.

L'ensemble de liaison 140 comprend une pièce de liaison 150 s'étendant à travers l'ouverture 108 du support de fixation 104, depuis la partie externe 141 jusqu'à la partie interne 142 de l'ensemble de liaison 140. La partie interne 142 est solidaire de l'élément de maintien 160. En particulier, la pièce de liaison 150 peut être une vis comprenant un corps fileté, et la partie interne 142 peut comprendre un élément d'accueil 144 taraudé dans lequel est vissé le corps fileté de la vis constituant l'élément de liaison 150. La pièce de liaison 150 peut traverser un trou de l'élément de maintien 160 et ainsi s'étendre d'un côté radialement interne à l'élément de maintien 160, c'est-à-dire en direction du carter 10. L'élément d'accueil 144 peut alors être disposé du côté radialement interne à l'élément de maintien 160, de sorte à maintenir l'élément de maintien 160. L'élément d'accueil 144 peut typiquement être un écrou vissé sur une extrémité de la vis 150, venant en appui sur la face radialement interne de l'élément de maintien 160.

De préférence, la partie interne 142 de la pièce de liaison est disposée entre deux tubes de refroidissement 120 axialement adjacents. Ainsi, une extrémité de la pièce de liaison 150 s'étend du côté radialement interne à l'élément de maintien 160 entre les deux tubes de refroidissement 120 axialement adjacents solidaires de l'élément de maintien 160. Le trou de l'élément de maintien 160 qui est traversé par la pièce de liaison est alors ménagé dans la partie centrale 161 qui joint les deux portions 162, 163 en forme de demi-anneaux.

L'ensemble de liaison 140 comprend une douille 145 s'étendant dans la partie externe de l'ensemble de liaison. La douille 145 présente en son centre un passage dans lequel s'étend la pièce de liaison 150. De préférence, la douille 145 présente une section circulaire. La douille 145 forme une butée dans la direction radialement interne pour la pièce de liaison 150. A cet effet, la pièce de liaison 150 présente à son extrémité radialement externe une tête 151 définie par une section élargie, et la douille 145 présente un épaulement 146 formant butée dans la direction radialement interne pour la tête 151 de la pièce de liaison.

Plus précisément, la douille 145 comporte une première partie présentant une section large autorisant le passage de la pièce de liaison 150, y compris sa tête 151, et de préférence autorisant également le passage d'un outil de mise en place de la pièce de liaison 150, comme par exemple une clé de serrage en prise avec la tête 151. Cette première partie est prolongée radialement vers l'intérieur par une seconde partie présentant une section étroite, autorisant le passage d'une extrémité de la pièce de liaison 150 mais interdisant le passage de la tête 151, la transition entre la première partie et la deuxième partie de la douille 145 formant l'épaulement 146. De préférence, et comme illustré, la seconde partie de la douille 145 traverse l'ouverture 108, protégeant ainsi la pièce de liaison 150. La seconde partie de la douille 145 peut alors venir au contact de la pièce de maintien 160 sur sa face radialement extérieure.

Lors de la mise en place de l'ensemble de liaison 140, il suffit donc d'introduire la pièce de liaison 150 dans la douille jusqu'à ce que la tête 151 soit en butée contre l'épaulement 146. Dans le cas où la pièce de liaison est une vis, cette butée peut ainsi marquer la limite de vissage en limitant naturellement celui-ci. Il s'agit donc d'un montage très simple ne requérant aucun réglage. Il est également possible d'appliquer un couple de serrage prédéterminé, par exemple le même pour toutes les pièces, qui ne soit pas un couple de réglage. Alternativement, il serait possible de prévoir que la douille 145 et la pièce de liaison 150 forme une seule pièce. De préférence toutefois, la douille 145 et la pièce de liaison 150 sont distinctes.

L'ensemble de liaison 140 comprend dans sa partie externe 141 un élément de rappel élastique sollicité en compression en direction du support de fixation 104 par la pièce de liaison 150. L'élément de rappel élastique prend préférentiellement la forme d'un ressort 170, tel que représenté sur les **figures 3** **et** **4****.** Le ressort 170 est de préférence disposé autour de la douille 145. La douille 145 forme butée dans la direction radialement externe pour le ressort 170. Pour ce faire, et la douille présente une collerette 147 faisant saillie dans une direction opposée au centre de la douille 145 par lequel passe la pièce de liaison 150, et le ressort 170 est disposé entre cette collerette 147 et le support de fixation 104. De préférence, comme visible sur la **figure 4****,** cette collerette 147 s'étendant depuis l'extrémité externe de la douille 145.

C'est par l'intermédiaire de la douille 145 que le ressort 170 est comprimé en direction du support de fixation 104 par la pièce de liaison 150. L'action du ressort 170 permet de garantir que s'exerce sur le support de fixation 104 une pression permettant le placage de l'ensemble de liaison 140 sur ce support de fixation 104, tout en autorisant un déplacement entre l'ensemble de liaison 140 et ce support de fixation 104. Le placage constant même lors du déplacement permet de garantir le maintien d'un jeu J entre un tube de refroidissement 120 et le carter 10, qui peut dès lors être envisagé minimal.

Ce déplacement de l'ensemble de liaison 140 est en outre rendu possible par le fait que l'ouverture 108 dans le support de fixation 104 présente une section supérieure à la section de la partie de l'ensemble de liaison 140 traversant cette ouverture 108, de sorte que l'ensemble de liaison 140 est mobile par rapport au support de fixation 104, ce qui permet la libre dilatation circonférentielle et/ou radiale des tubes de refroidissement 120 par rapport au support de fixation 104. De préférence, l'ouverture 108 présente une section de forme oblongue ou ovale, c'est-à-dire avec une dimension plus grande dans une direction que dans d'autres directions. Par exemple, l'ouverture du support de fixation 104 présente dans la direction circonférentielle de la turbomachine une dimension au moins 1,5 fois supérieure à sa dimension dans une direction (e.g. typiquement dans la direction axiale) perpendiculaire à la direction circonférentielle de la turbomachine.

Cette ouverture 108 autorise ainsi des déplacements de la douille 145 qui la traverse dans un plan orthogonal à l'axe de l'ouverture 108 et donc également des déplacements de l'élément de maintien 160 qui est rendu solidaire de la douille 145 par la pièce de liaison 150. Ces déplacements autorisent les dilatations différentielles des tubes de refroidissement 120 par rapport au carter 10 lors du fonctionnement.

Le dispositif de maintien peut comprendre un élément externe d'appui 155 dans la partie externe de l'ensemble de liaison 140, disposé contre la face externe du support de fixation 104, sur lequel appuie le ressort 170. L'élément externe d'appui 155 est par exemple une rondelle métallique. L'élément externe d'appui 155 n'est pas solidaire de la douille 145. L'élément externe d'appui n'est pas fixé au support de fixation 104, et autorise donc par son glissement sur la surface du support de fixation 104, le déplacement de l'ensemble de liaison 140 par rapport au support de fixation 104.

Un élément interne d'appui 156 peut être présent dans la partie interne 142 de l'ensemble de liaison, disposé contre la face interne du support de fixation 104 et séparant l'élément de maintien 160 et ladite face interne du support de fixation 104. L'élément interne d'appui 156 comprend un orifice faisant face à l'ouverture 108 du support de fixation 104. L'élément interne d'appui 156 peut par exemple être une rondelle métallique. Comme l'élément externe d'appui 155, l'élément interne d'appui 156 n'est pas fixé au support de fixation 104, et autorise donc, par son glissement sur la surface interne du support de fixation 104, le déplacement de l'ensemble de liaison 140 par rapport au support de fixation 104. L'élément interne d'appui 156 permet d'éviter l'usure de l'élément de maintien 160 contre la surface interne du support de fixation 104. Il permet également de garantir un écartement d'une distance déterminée entre l'élément de maintien 160 et le support de fixation 104, évitant de prévoir une marge de tolérance pour le jeu J entre les tubes de refroidissement 120 et la face extérieure 11 du carter 10.

L'élément externe d'appui 155 et l'élément interne d'appui 156 peuvent être utilisées comme variables d'ajustement éventuelles (par leurs épaisseurs respectives ou par leur simple présence ou absence) pour obtenir le jeu J désiré. On peut ainsi les utiliser pour rectifier les formes d'autres éléments du système de refroidissement 100 qui impacteraient le jeu J. Par exemple, l'épaisseur de l'élément externe d'appui 155 et/ou l'élément interne d'appui 156 peut être adaptée à d'éventuelles variations de la distance entre le support de fixation 104 et la face extérieure 11 du carter 10, afin de les compenser. Ces éléments peuvent également être utilisés comme cale de réglage au montage si besoin.

Lors de la mise en place du système de refroidissement 100, les éléments de maintien 160 des tubes de refroidissement 120 sont fixés aux tubes de refroidissement 120, par exemple par brasage. Avantageusement, différents éléments peuvent être préassemblés sur le support de fixation 104 avant le montage de celui-ci sur le carter 10. Il est par exemple possible d'y disposer les éléments externes d'appui 155 avec les orifices en face de l'ouverture 108, puis de mettre en place les ressorts 170 sur ces éléments externes d'appui 155. Les douilles 145 sont ensuite introduites dans les ouvertures 108 de sorte que les ressorts soient compressés par les collerettes 147 des douilles 145. Les pièces de liaison 150 sont alors mises en place dans les douilles 145, et viennent en prise avec l'élément de serrage 142 de la partie interne de l'ensemble de liaison 140. Le serrage des pièces de liaison 150 rend la douille 145 solidaire de l'élément de maintien 160. Plus précisément, dans le cas typique où la pièce de liaison 150 est une vis, il suffit de visser la vis jusqu'à son blocage. Lors du serrage d'une pièce de liaison 150, la tête 151 vient en butée contre l'épaulement 146 de la douille 145. La douille 145 est alors entraînée dans la direction radialement interne, à travers l'ouverture 108, jusqu'à venir en butée contre l'élément de maintien 160. Il n'est alors plus possible de serrer la pièce de liaison 150. Le système de refroidissement 100 constitué par le dispositif de maintien 101 et les tubes de refroidissement 120 peut alors être mis en place sur le carter 10, par exemple en utilisant les moyens de fixation tels que des trous 107 présents aux extrémités 106 du support de fixation 104.

La partie externe 141 et la partie interne 142 de l'ensemble de liaison 140 sont alors solidarisées par la pièce de liaison 150, et maintiennent l'élément de maintien 160 par rapport au support de fixation 104, et donc le jeu J entre un tube de refroidissement 120 et la face extérieure 11 du carter 10, tout en permettant un déplacement relatif entre:
- d'une part l'ensemble de liaison 140, l'élément de maintien 160, et le tube de refroidissement 120, et
- d'autre part le support de fixation 104 et le carter 10.

La mise en place du dispositif de maintien 101 ne requiert donc pas de réglage particulier pour assurer un jeu J (dans le sens radial de la turbine) approprié entre un tube de refroidissement 120 et la face extérieure 11 du carter 10. Le jeu J est déterminé par les dimensions des éléments constitutifs du dispositif de maintien 101. Le montage du dispositif de maintien 101 est donc grandement simplifié. Il suffit par exemple de visser jusqu'à son blocage la pièce de liaison 150.

De plus, il est alors possible de prévoir un jeu J minimal, puisque celui-ci est garanti par le dispositif de maintien 101, et qu'il n'est donc plus nécessaire de prévoir une marge de tolérance. Eventuellement, en choisissant les caractéristiques (notamment l'épaisseur) des éléments d'appui 155, 156 pour les utiliser en tant que cale de réglage (pour gérer les dérogations par exemple), il est possible de réduire encore les tolérances sur le J.

En outre, l'élément de maintien 160 d'un tube de refroidissement 120 laissant libre la partie du tube de refroidissement 120 qui fait face au carter 10, le refroidissement du carter 10 est amélioré, d'autant plus qu'il est possible de rapprocher ainsi le tube de refroidissement du carter 120. L'absence de l'élément de maintien 160 entre le tube de refroidissement 120 et le carter 10 signifie également qu'une épaisseur en moins est à prendre en compte pour le dimensionnement du système de refroidissement 100, facilitant ce dimensionnement et le rendant plus précis, permettant là encore de prévoir un jeu J minimal.

## Revendications

1. Dispositif de maintien (101) d'au moins un tube de refroidissement (120) d'un système de refroidissement (100) de carter (10) de turbomachine, le dispositif de maintien (101) s'étendant autour d'un axe définissant une direction axiale et comportant un support de fixation (104) adapté pour être solidarisé au carter (10) en étant disposé de façon radialement externe par rapport au carter (10), un élément de maintien (160) configuré pour maintenir le tube de refroidissement (120), et un ensemble de liaison (140) qui relie l'élément de maintien (160) et le support de fixation (104),
**caractérisé en ce que** l'ensemble de liaison (140) s'étend de part et d'autre du support de fixation (104), définissant par rapport au support de fixation (104) une partie externe (141) de l'ensemble de liaison radialement extérieure au support de fixation (104) et une partie interne (142) de l'ensemble de liaison, radialement intérieure au support de fixation (104), du côté du carter (10), l'ensemble de liaison (140) comprenant une pièce de liaison (150) s'étendant à travers une ouverture (108) du support de fixation (104) depuis la partie externe (141) jusqu'à la partie interne (142), la partie interne (142) radialement intérieure au support de fixation (104) étant solidaire de l'élément de maintien (160) tandis que la partie externe (141) comprend un élément de rappel élastique (170) sollicité en compression en direction du support de fixation (104) par la pièce de liaison (150), dans lequel l'élément de maintien (160) est configuré pour maintenir deux tubes de refroidissement (120) axialement adjacents, et la partie interne (142) de l'ensemble de liaison est disposée entre deux tubes de refroidissement (120) axialement adjacents.

2. Dispositif de maintien selon la revendication 1, dans lequel l'ouverture (108) du support de fixation (104) présente une section supérieure à la section de la partie de l'ensemble de liaison (140) traversant cette ouverture (108), de sorte à autoriser un déplacement entre l'ensemble de liaison (140) et le support (104), l'ouverture (108) du support de fixation (104) présentant une forme oblongue, l'ouverture (108) du support de fixation (104) présentant dans la direction circonférentielle une dimension au moins 1,5 fois supérieure à sa dimension dans la direction axiale.

3. Dispositif de maintien selon l'une des revendications 1 à 2, comprenant une douille (145) s'étendant dans la partie externe (141) de l'ensemble de liaison (160), la douille formant butée dans la direction radialement interne pour la pièce de liaison (150), et formant butée dans la direction radialement externe pour l'élément de rappel élastique (170), dans lequel dans lequel la pièce de liaison (150) présente à son extrémité radialement externe une tête (151) définie par une section élargie, et la douille (145) présente un épaulement (146) formant butée dans la direction radialement interne pour la tête de la pièce de liaison (150), et dans lequel la douille présente une collerette (147) et l'élément de rappel élastique (170) est disposé entre cette collerette (147) et le support de fixation (104).

4. Dispositif de maintien selon l'une des revendications 1 à 3, dans lequel la pièce de liaison (150) est une vis comprenant un corps fileté, et la partie interne comprend un élément d'accueil (144) taraudé disposé du côté radialement interne à l'élément de maintien (160), et dans lequel est vissé le corps fileté de la vis.

5. Dispositif de maintien selon l'une des revendications 1 à 4, comprenant un élément externe d'appui (155) dans la partie externe (141) de l'ensemble de liaison (140), disposé contre la face externe du support de fixation (104), sur lequel appuie l'élément de rappel élastique (170).

6. Dispositif de maintien selon l'une des revendications 1 à 5, comprenant un élément interne d'appui (156) dans la partie interne (142) de l'ensemble de liaison (140), disposé contre la face interne du support de fixation (104) et séparant l'élément de maintien (160) et ladite face interne du support de fixation (104).

7. Dispositif de maintien selon l'une des revendications 1 à 6, dans lequel l'élément de maintien (160) vient recouvrir partiellement le pourtour des tubes de refroidissement (120) et s'étend autour d'une partie de la circonférence d'un tube de refroidissement (120) selon une forme de demi-anneau.

8. Dispositif de maintien selon l'une des revendications 1 à 7, dans lequel l'élément de maintien (160) s'étend autour d'une partie de la circonférence d'un tube de refroidissement et laisse libre une autre partie de la circonférence du tube de refroidissement destinée à faire face au carter (10).

9. Dispositif de maintien selon l'une des revendications 1 à 8, dans lequel l'élément de maintien présente une partie centrale (161) globalement plane et deux portions (162, 163) en forme de demi-anneaux destinées à épouser et à recouvrir, au moins partiellement, la forme annulaire des deux tubes de refroidissement (120) adjacents.

10. Dispositif de maintien selon la revendication 9, dans lequel un trou de l'élément de maintien (160) traversé par la pièce de liaison (150) est ménagé dans la partie centrale (161) qui joint les deux portions (162, 163) en forme de demi-anneaux.

11. Système (100) de refroidissement de carter de turbomachine, comportant :
- une pluralité de tubes de refroidissement (120),
- un dispositif de maintien (101) selon l'une des revendications précédentes, l'élément de maintien (160) maintenant deux tubes de refroidissement axialement adjacents.

12. Turbomachine pour aéronef comprenant un carter (10) s'étendant autour d'une direction axiale de la turbomachine, et un système de refroidissement (100) selon la revendication précédente, le support de fixation (104) étant solidarisé au carter (10) de façon radialement externe par rapport au carter (10), la pluralité de tubes de refroidissement (120) étant disposée de façon radialement externe par rapport au carter (10) entre le carter (10) et le support de fixation (104).

## Patentansprüche

1. Haltevorrichtung (101) mindestens einer Kühlleitung (120) eines Kühlsystems (100) eines Turbotriebwerkgehäuses (10), wobei sich die Haltevorrichtung (101) um eine Achse herum erstreckt, die eine axiale Richtung definiert, und eine Befestigungshalterung (104) beinhaltet, die angepasst ist, um fest mit dem Gehäuse (10) verbunden zu werden, und radial außerhalb in Bezug auf das Gehäuse (10) angeordnet ist, ein Halteelement (160), das konfiguriert ist, um die Kühlleitung (120) zu halten, und eine Verbindungseinheit (140), die das Halteelement (160) und die Befestigungshalterung (104) verbindet,
**dadurch gekennzeichnet, dass** sich die Verbindungseinheit (140) beiderseits der Befestigungshalterung (104) erstreckt, in Bezug auf die Befestigungshalterung (104) ein Außenteil (141) der Verbindungseinheit, radial außerhalb der Befestigungshalterung (104), und ein Innenteil (142) der Verbindungseinheit, radial innerhalb der Befestigungshalterung (104) definiert, wobei die Verbindungseinheit (140) auf Seiten des Gehäuses (10) ein Verbindungsstück (150) umfasst, das sich durch eine Öffnung (108) der Befestigungshalterung (104) hindurch, vom Außenteil (141) bis zum Innenteil (142) erstreckt, wobei das Innenteil (142) radial innerhalb der Befestigungshalterung (104) fest mit dem Halteelement (160) verbunden ist, während das Außenteil (141) ein elastisches Rückstellelement (170) umfasst, das in Richtung der Befestigungshalterung (104) durch das Verbindungsstück (150) druckbeansprucht ist, wobei das Halteelement (160) konfiguriert ist, um zwei axial benachbarte Kühlleitungen (120) zu halten, und das Innenteil (142) der Verbindungseinheit zwischen zwei axial benachbarten Kühlleitungen (120) angeordnet ist.

2. Haltevorrichtung nach Anspruch 1, wobei die Öffnung (108) der Befestigungshalterung (104) einen Querschnitt aufweist, der größer als der Querschnitt des Teils der Verbindungseinheit (140) ist, der diese Öffnung (108) durchquert, um eine Bewegung zwischen der Verbindungseinheit (140) und der Halterung (104) zu erlauben, wobei die Öffnung (108) der Befestigungshalterung (104) eine längliche Form aufweist, wobei die Öffnung (108) der Befestigungshalterung (104) in der Umfangsrichtung eine Abmessung mindestens 1,5 Mal größer als ihre Abmessung in der axialen Richtung aufweist.

3. Haltevorrichtung nach einem der Ansprüche 1 bis 2, eine Hülse (145) umfassend, die sich in dem Außenteil (141) der Verbindungseinheit (160) erstreckt, wobei die Hülse einen Anschlag in der radial inneren Richtung für das Verbindungsstück (150) bildet, und einen Anschlag in der radial äußeren Richtung für das elastische Rückstellelement (170) bildet, wobei das Verbindungsstück (150) an seinem radial äußeren Ende einen Kopf (151) aufweist, der durch einen erweiterten Querschnitt definiert wird, und die Hülse (145) einen Ansatz (146) aufweist, der einen Anschlag in der radial inneren Richtung für den Kopf des Verbindungsstücks (150) bildet, und wobei die Hülse einen Kragen (147) aufweist, und das elastische Rückstellelement (170) zwischen diesem Kragen (147) und der Befestigungshalterung (104) angeordnet ist.

4. Haltevorrichtung nach einem der Ansprüche 1 bis 3, wobei das Verbindungsstück (150) eine Schraube ist, die einen Gewindekörper umfasst, und das Innenteil ein Aufnahmeelement mit Innengewinde (144) umfasst, das auf der radial inneren Seite zum Halteelement (160) angeordnet ist, und in das der Gewindekörper der Schraube geschraubt ist.

5. Haltevorrichtung nach einem der Ansprüche 1 bis 4, umfassend ein äußeres Auflageelement (155) in dem Außenteil (141) der Verbindungseinheit (140), das an der Außenseite der Befestigungshalterung (104) angeordnet ist, an der das elastische Rückstellelement (170) anliegt.

6. Haltevorrichtung nach einem der Ansprüche 1 bis 5, umfassend ein inneres Auflageelement (156) im Innenteil (142) der Verbindungseinheit (140), das an der Innenseite der Befestigungshalterung (104) angeordnet ist, und das Halteelement (160) und die Innenseite der Befestigungshalterung (104) trennt.

7. Haltevorrichtung nach einem der Ansprüche 1 bis 6, wobei das Halteelement (160) die Umrandung der Kühlleitungen (120) teilweise abdeckt, und sich um einen Teil des Umfangs einer Kühlleitung (120) entsprechend einer Habringform erstreckt.

8. Haltevorrichtung nach einem der Ansprüche 1 bis 7, wobei sich das Halteelement (160) um einen Teil des Umfangs einer Kühlleitung herum erstreckt, und einen anderen Teil des Umfangs der Kühlleitung freilässt, der dazu bestimmt ist, in Richtung des Gehäuses (10) zu weisen.

9. Haltevorrichtung nach einem der Ansprüche 1 bis 8, wobei das Halteelement ein im Allgemeinen flacher Mittelteil (161) und zwei Abschnitte (162, 163) in Form von Halbringen aufweist, die dazu bestimmt sind, sich an die Ringform der beiden benachbarten Kühlleitungen (120) anzulegen und diese zu bedecken.

10. Haltevorrichtung nach Anspruch 9, wobei ein Loch des Halteelements (160), das von dem Verbindungsstück (150) durchquert wird, in dem Mittelteil (161) eingerichtet ist, der die beiden Abschnitte (162, 163) in Form von Halbringen vereinigt.

11. Kühlsystem (100) eines Turbotriebwerkgehäuses, umfassend:
- eine Vielzahl von Kühlleitungen (120),
- eine Haltevorrichtung (101) nach einem der vorstehenden Ansprüche, wobei das Halteelement (160) zwei axial benachbarte Kühlleitungen hält.

12. Turbotriebwerk für ein Luftfahrzeug, umfassend ein Gehäuse (10), das sich um eine axiale Richtung des Turbotriebwerks herum erstreckt, und ein Kühlsystem (100) nach dem vorstehenden Anspruch, wobei die Befestigungshalterung (104) radial außerhalb in Bezug auf das Gehäuse (10) fest mit dem Gehäuse (10) verbunden ist, wobei die Vielzahl von Kühlleitungen (120), radial außerhalb in Bezug auf das Gehäuse (10), zwischen dem Gehäuse (10) und der Befestigungshalterung (104) angeordnet sind.

## Claims

1. A holding device (101) for at least one cooling tube (120) of a cooling system (100) of a turbomachine casing (10), the holding device (101) extending about an axis defining an axial direction and comprising a fixing support (104) adapted to be secured to the casing (10) by being disposed radially outwardly with respect to the casing (10), a holding element (160) configured to hold the cooling tube (120) and a connection assembly (140) that connects the retaining member (160) and the fixing frame (104),
**characterized in that** the connection assembly (140) extends on either side of the fixing frame (104), defining with respect to the fixing frame (104) an outer portion (141) of the connection assembly radially outwardly of the fixing frame (104) and an inner portion (142) of the connection assembly radially interior to the fixing frame (104), on the side of the housing (10), the connection assembly (140) comprising a connection part (150) extending through an opening (108) in the fixing frame (104) from the outer portion (141) to the inner portion (142), the inner portion (142) radially inward of the fixing frame (104) being secured to the holding element (160) while the outer portion (141) comprises a resilient biasing element (170) biased in compression toward the fixing frame (104) by the connection part (150), wherein the holding member (160) is configured to hold two axially adjacent cooling tubes (120), and the inner portion (142) of the connection assembly is disposed between two axially adjacent cooling tubes (120) .

2. The holding device of claim 1, wherein the opening (108) of the fixing frame (104) has a cross-sectional area greater than the cross-sectional area of the portion of the connection assembly (140) passing through this opening (108), so as to allow movement between the connection assembly (140) and the fixing frame (104), the opening (108) in the fixing frame (104) is elongated, the opening (108) in the fixing frame (104) having a circumferential dimension at least 1.5 times greater than its axial dimension.

3. A holding device according to any of claims 1 to 2, comprising a bushing (145) extending into the outer portion (141) of the connection assembly (160), the bushing forming an abutment in the radially inner direction for the connection part (150), and forming an abutment in the radially outer direction for the resilient biasing element (170), wherein the connection part (150) has at its radially outer end a head (151) defined by an enlarged cross-section, and the bushing (145) has a shoulder (146) forming an abutment in the radially inner direction for the head of the connection part (150), and wherein the bushing has a flange (147) and the resilient biasing element (170) is arranged between this flange (147) and the fixing frame (104).

4. The holding device according to any of claims 1 to 3, wherein the connection part (150) is a screw comprising a threaded body, and the inner part comprises a threaded receiving element (144) arranged on the radially inner side of the holding element (160), and into which the threaded body of the screw is screwed.

5. The holding device according to any one of claims 1 to 4, comprising an external support element (155) in the external portion (141) of the connection assembly (140), disposed against the external face of the fixing frame (104), on which the resilient biasing element (170) bears.

6. The holding device according to any of claims 1 to 5, comprising an internal support element (156) in the internal portion (142) of the connection assembly (140), disposed against the internal face of the fixing frame (104) and separating the holding element (160) and said internal face of the fixing frame (104).

7. The holding device of any of claims 1 to 6, wherein the holding element (160) partially overlaps the circumference of the cooling tubes (120) and extends around a portion of the circumference of a cooling tube (120) in a half-ring shape.

8. The holding device of any of claims 1 to 7, wherein the holding element (160) extends around a portion of the circumference of a cooling tube and leaves free another portion of the circumference of the cooling tube intended to face the housing (10).

9. A holding device according to one of claims 1 to 8, wherein the holding element has a generally planar central part (161) and two portions (162, 163) in the form of half-rings intended to match and cover, at least partially, the annular shape of the two adjacent cooling tubes (120).

10. The holding device according to claim 9, wherein a hole of the holding element (160) through which the connection part (150) passes is provided in the central portion (161) that joins the two half-ring portions (162, 163).

11. A turbomachine crankcase cooling system (100), comprising:
- a plurality of cooling tubes (120),
- a holding device (101) according to any of the preceding claims, the holding element (160) holding two axially adjacent cooling tubes.

12. An aircraft turbomachine comprising a casing (10) extending about an axial direction of the turbomachine, and a cooling system (100) according to the preceding claim, the fixing frame (104) being attached to the casing (10) radially outwardly of the casing (10), the plurality of cooling tubes (120) being disposed radially outwardly of the casing (10) between the casing (10) and the fixing frame (104).
